**Europäisches Patentamt**

**European Patent Office**

**Office européen des brevets**

(19)

(11) Veröffentlichungsnummer: **0 096 788**
**B1**

(12) **EUROPÄISCHE PATENTSCHRIFT**

(45) Veröffentlichungstag der Patentschrift:
**20.11.86**

(51) Int. Cl.⁴: **B 23 K 37/04**

(21) Anmeldenummer: **83105318.6**

(22) Anmeldetag: **30.05.83**

(54) **Vorrichtung zum gegenseitigen Ausrichten und drehbaren Halten von Umfangsflächen mindestens zweier Körper.**

(30) Priorität: **04.06.82 CH 3482/82**

(43) Veröffentlichungstag der Anmeldung:
**28.12.83 Patentblatt 83/52**

(45) Bekanntmachung des Hinweises auf die Patenterteilung:
**20.11.86 Patentblatt 86/47**

(84) Benannte Vertragsstaaten:
**AT BE DE FR GB IT NL SE**

(56) Entgegenhaltungen:
**DD - A - 52 754**
**DE - A - 1 931 172**
**DE - A - 2 827 343**
**DE - B - 2 417 321**
**DE - U - 1 899 244**
**DE - U - 6 802 044**

(73) Patentinhaber: **ROSSI AG, Wetzikon Werkzeug- und Spezialmaschinenbau, Bahnhofstrasse 217, CH-8623 Wetzikon 3 (CH)**

(72) Erfinder: **Rossi, Claudio, Mühleackerstrasse 8, CH-8620 Wetzikon (CH)**

(74) Vertreter: **EGLI-EUROPEAN PATENT ATTORNEYS, Horneggstrasse 4, CH-8008 Zürich (CH)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft eine Vorrichtung zum gegenseitigen Ausrichten und drehbaren Halten von Umfangsflächen mindestens zweier Körper, gemäss dem Oberbegriff des 1. Patentanspruches.

In der DE-B-24 17 321 ist eine derartige bekannte Vorrichtung zum Halten und Zentrieren von miteinander zu verbindenden, stossenden Rohrschüssen und dergleichen beschrieben. Durch die Öffnung an der unteren Seite der Vorrichtung bedingt, sind die auszurichtenden Körper nicht vollständig umschlungen. Zum Umschlingen wird ein bandartiges Gebilde verwendet, das in Richtung parallel zur Drehachse des Körpers ausgerichtet ist. Auf der Aussenseite des Bandes liegen Führungsorgane beidseitig einer Umschlingungslücke an, wobei Spannungsorgane in die Bandschlaufe eingreifen.

Ferner ist gemäss DD-A-52 754 bekannt, als Ausrichtelement ein endloses Band zu verwenden, wobei ein Spannorgan innenseitig in eine Bandschleife eingreift.

Durch die DE-A 1 931 172 ist eine Vorrichtung zum Herstellen von Metallfässern bekannt, durch die der Fassschuss und jeweils ein Fassboden an drei Stellen mittels Stutz- und Führungsrollen zusammengehalten werden, die drehantreibbar sind. Eine solche Vorrichtung ist nur anwendbar, wenn die drehbar zu haltenden Hohlkörper nicht unrund sind bzw. keine Welligkeit oder Durchmesserverschiedenheiten aufweisen, da sie sonst an den Stütz- und Führungsrollen hängenbleiben. Die Halterung an nur drei Umfangsstellen ermöglicht nur eine unzureichende Zentrierung und verhindert insbesondere nicht gegenseitige Verschiebungen der miteinander zu verschweissenden Teile aufgrund von Formungenauigkeiten und Wärmedehnungen. Der Antrieb jeder Stütz- und Führungsrolle ist verhältnismässig aufwendig. Der direkte Drehantrieb der miteinander zu verschweissenden zylindrischen Hohlkörper bei Verwendung stationärer Zentrierorgane bringt den Nachteil mit sich, dass sich die Hohlkörper beim Start zueinander verschieben können, so dass Fehlschweissungen auftreten können. Bei Verwendung einer grösseren Anzahl von Stütz- und Führungsrollen entsteht ein hoher konstruktiver Aufwand, insbesondere, wenn eine Anpassung an verschiedene Durchmesser erforderlich ist. Um eine genauere Zentrierung zu erreichen, wurden deshalb z.B. durch die DE-U 1 899 244 und 6 802 044 Spannringe vorgeschlagen, deren Krümmung dem Umfang der miteinander zu verschweissenden Hohlkörper angepasst ist. Eine solche Vorrichtung ist somit nur für Körper genau vorbestimmter Abmessungen geeignet, oder sie erfordert für ihre Anpassung an andere Abmessungen einen aufwendigen Umbau.

Der Erfindung liegt von daher die Aufgabe zugrunde, eine Vorrichtung der eingangs genannten Art so zu verbessern, dass sie mit geringem konstruktiven Aufwand eine genaue Ausrichtung zweier Körper zueinander ermöglicht und auf einfache Weise an verschiedene Abmessungen der Körper angepasst werden kann. Die genaue Ausrichtung soll auch bei Formungenauigkeiten von dünnwandigen hohlzylindrischen Körpern möglich sein. Die Lösung dieser Aufgabe erfolgt aufgrund der Merkmale des Patentanspruchs 1.

Die erfindungsgemässe Vorrichtung ermöglicht auch ohne Einfluss auf die Genauigkeit der Ausrichtung der Körper zueinander die Verwendung eines direkt auf die Körper wirkenden Drehantriebes für die Durchführung einer kontinuierlichen Schweissung, jedoch auch einen Antrieb allein auf das Band, so dass mehrere Antriebe vermeidbar sind.

Vorteilhaft wird ein Gliederband bzw. eine Kette verwendet, da sie auf einfache Weise in Richtung parallel zur Drehachse der Körper starr ausgeführt sein kann, ohne die leichte Biegsamkeit eines Bandes zu verlieren.

Um die gegenseitig auszurichtenden Körper auf einfache Weise in die Vorrichtung einführen zu können, sind entlang des Bandes im Aufnahmebereich der Körper vorteilhaft als Haftmagnete ausgebildete Greifer vorgesehen, die das Band im entspannten Zustand zurückhalten.

Im folgenden wird die Erfindung anhand eines in den Zeichnungen dargestellten Ausführungsbeispiels näher erläutert.

Es zeigt:

Fig. 1 perspektivische Darstellung von zueinander auszurichtenden dünnwandigen Hohlkörpern für die Herstellung einer Umfangsschweissung,

Fig. 2 eine perspektivische schematische Darstellung der Vorrichtung mit in ihr eingespannten Teilen eines zylindrischen Hohlkörpers,

Fig. 3 eine schematisch dargestellte Ansicht der Vorrichtung in axialer Richtung bei zurückgehaltenem Band, und

Fig. 4 eine Darstellung der Vorrichtung entsprechend Fig. 3 mit eingespannten, miteinander zu verschweissenden Körpern.

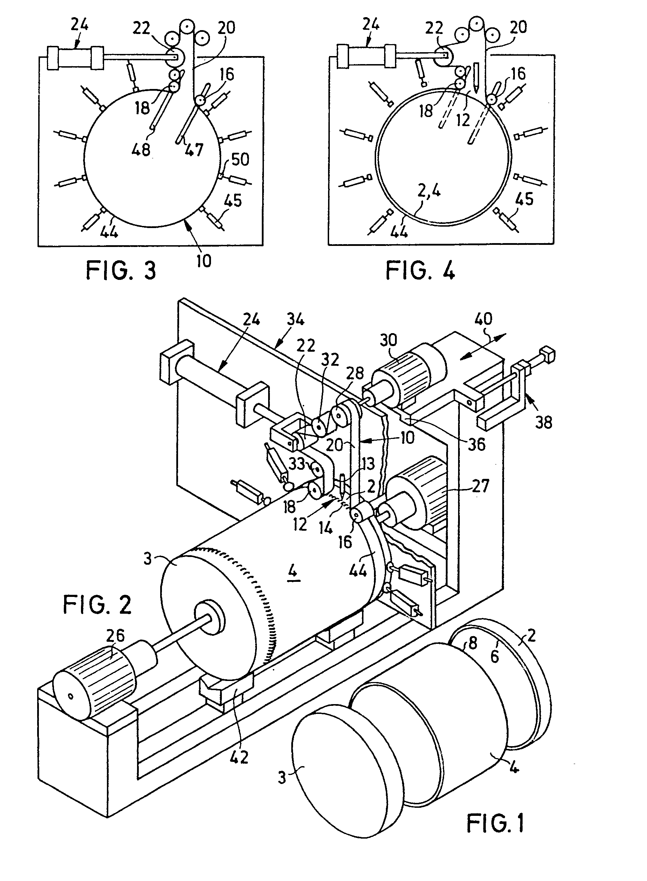

Eine gesamthaft in Fig. 2 dargestellte Vorrichtung ist besonders vorteilhaft anwendbar zum Zusammenhalten und Zentrieren von dünnwandigen kreiszylindrischen Hohlkörpern zueinander, wie z.B. von Kesselböden 2, 3, zu einem Kesselmantel 4, um diese durch eine Umfangsnaht entlang ihren stirnseitigen Kanten 6,8 miteinander zu verschweissen. Hierzu wird der hohlzylindrische Kesselmantel 4 mit einem Kesselboden 2 bzw. 3 so in die Vorrichtung nach Fig. 2 eingesetzt, dass ihr endloses Band 10, vorzugsweise in Form einer verhältnismässig breiten Kette, die aneinanderliegenden Stirnkanten 6, 8 so überdeckt, dass die somit gebildete Nahtstelle 6, 8 sich in der Mitte der Bandbreite befindet. Die radiale Spannkraft des Bandes 10 wirkt somit gleichmässig im Bereich der miteinander zu verschweissenden Stirnkanten 6, 8 und gleicht Formungenauigkeiten bzw. Abweichungen von der genauen Kreisform aus. Eine radiale Versetzung der zylindrischen Wände des Kesselmantels 4 und der Kesselböden 2, 3 relativ zueinander wird somit verhindert oder beseitigt.

Das Band 10 ist vorzugsweise als Mehrfach-Rollenkette (DIN 8180) ausgeführt, wie sie z.B. für Kettenantrieb üblich sind. Eine Mehrfach-Rollenkette hat mehrere quer zur Kette nebeneinander auf einem gemeinsamen Bolzen angeordnete Hülsen mit dazwischenliegenden Laschen, so dass eine ausreichende Breite für die Überdeckung der Umfangsnaht gegeben ist.

Das Band 10 umschliesst die beiden Umfangsflächen der in axialer Richtung aneinanderstossenden Körper 2,4 bis auf eine verhältnismässig schmale Lücke 12, in der eine Schweisselektrode 13 zur Herstellung der Schweissnaht 14 angeordnet ist. Diese Umschlingungslücke 12 ergibt sich durch die Umlenkung des Bandes 10 um zwei in Umfangsrichtung nebeneinander angeordnete, stationär gelagerte Rollen 16, 18, die bei Verwendung einer Kette als Kettenräder ausgeführt sein können. Die somit vorhandene Bandschlaufe 20 ist über eine Spannrolle 22 geführt, die durch eine hydraulische Spannvorrichtung 24 gehalten ist. Durch Zug der Spannrolle 22 nach aussen erhält das Band 10 eine Zugspannung, mit der es sich fest um die Umfangsflächen der zylindrischen Körper 2, 4 legt. Falls die durch das Band 10 eingespannten zylindrischen Körper 2, 4 nicht unmittelbar durch Drehantriebe 26, 27 angetrieben werden, kann in die Bandschlaufe 20 weiterhin eine Antriebsrolle bzw. ein Antriebszahnrad 28 eines somit auf das Band 20 wirkenden Drehantriebes 30 eingreifen. An der Bandaussenseite können ausserdem noch Bandführungsrollen 32, 33 vorgesehen sein. Alle in das Band 20 eingreifenden Rollen sowie die zugehörigen Antriebe 24, 30 sind an einem stationären Vorrichtungsteil 34 gelagert oder mit diesem verbunden, der sich entlang einer Führung 36 mittels einer Stellvorrichtung 38 in axialer Richtung der Vorrichtung verschieben lässt, wie durch die Pfeile 40 angedeutet ist. Statt eine Axialverschiebung des Bandes vorzusehen, kann es jedoch auch ausreichend sein, nur eine Axialverschiebung der Körper 2, 3, 4 auf einer Führung 42 vorzusehen, um aneinandergrenzende Körper 2, 4 in das endlose Band einführen zu können, bis ihr Nahtbereich 6, 8 von dem Band 10 eingeschlossen ist. Letztere Ausführungsform ist zweckmässig, wenn nur ein Band 10 an einem Ende der Vorrichtung vorgesehen wird. Die erste Ausführungsform mit der Stellvorrichtung 38 ermöglicht bei Verwendung von zwei in axialem Abstand zueinander angeordneten Bändern 10 das Einführen der zusammenfügenden Teile 2, 3, 4 zwischen diesen Bändern.

Für diese Einführungsbewegung ist es selbstverständlich erforderlich, dass das Band 20 zuvor eine vergrösserte Aufnahmeschlaufe 44 bildet, die in der schematischen Darstellung der Fig. 3 dargestellt ist. Die vergrösserte Aufnahmeschlaufe 44 ergibt sich durch mehrere in Umfangsrichtung nebeneinander angeordnete, radial verstellbare Greifer 45, die das Band auseinanderziehen. Im unteren Bereich der Aufnahmeschlaufe reichen die Schwerkräfte aus, um das Band bogenförmig durchhängen zu lassen. Weiterhin sind zu diesem Zweck und auch zur Anpassung an verschieden grosse Körper 2, 3, 4 die Umlenkrollen 16, 18 in angenähert radial gerichteten Führungen 47, 48 verstellbar. Diese Verstellung kann mittels einer nicht dargestellten Gewindespindel erfolgen, während die Bewegung der Greifer 45 z.B. durch pneumatische Antriebe erfolgen kann. Das Erfassen der Aufnahmeschlaufe 44 des Bandes 10 an ihrem Umfang kann durch elektromagnetische Haftmagnete 50 ermöglicht werden, wenn das Band aus Stahl ausgeführt ist bzw. eine Stahlkette verwendet wird. Nach Einführen der zueinander auszurichtenden Körper 2,4 in die Aufnahmeschlaufe kann das Spannen des Bandes mittels der Spannrolle 22 erfolgen, indem diese sich aus der Position entsprechend der Darstellung in Fig. 3 in die Position entsprechend der Darstellung in Fig. 4 bewegt. Dabei löst sich die Aufnahmeschlaufe von den Greifern 45.

Es versteht sich, dass das Band auch breit genug ausgeführt sein kann, um die Umfangsfläche von mehr als zwei Körpern in seiner Aufnahmeschlaufe einzuschliessen, z.B. wenn zwischen zwei zylindrischen Körpern gleichachsig ein Ring gehalten werden soll.

Es versteht sich auch, dass das in die freie Bandschlaufe 20 eingreifende Spannorgan 22 feststehend angebracht sein kann, wenn stattdessen mindestens eines der Umlenk- bzw. Führungsorgane 16, 18 für die Erzeugung der Bandspannung in Umfangsrichtung der Körper 2, 4 verstellt wird.

**Patentansprüche**

1. Vorrichtung zum gegenseitigen Ausrichten und drehbaren Halten von gleichartig geformten, stirnseitig aneinandergrenzenden Umfangsflächen von mindestens zwei Körpern (2,4), insbesondere eines Kesselbodens an einen Kesselmantel, an einer Rundschweissmaschine, mit einem stationären, in Führungsorganen lagernden Vorrichtungsteil (34), mit einem Mittel (10) zum unvollständigen, gemeinsamen Umschlingen der Umfangsflächen in Richtung parallel zur Drehachse der Körper (2,4), wobei Führungsorgane (16,18) und Spannorgane (22,24) beidseitig einer Umschlingungslücke (12) aussenseitig an dem Umschlingungsmittel (10) anliegen, dadurch gekennzeichnet, dass das Mittel (10) ein endloses Band (10) ist und ein Spannorgan (22) innenseitig in einer freien Schlaufe (20) des Bandes (10) angeordnet ist, dass ein Bandantrieb (28,30) in die Schlaufe (20) eingreift und dass eine Schweisselektrode (13) in der Umschlingungslücke (12) angeordnet ist.

2. Vorrichtung nach Anspruch 1, dadurch gekennzeichnet, dass das Band (10) als Gliederband ausgeführt ist.

3. Vorrichung nach Anspruch 2, dadurch gekennzeichnet, dass das Gliederband (10) eine Rollenkette ist, die mindestens zwei quer zum Band nebeneinander auf einem gemeinsamen Bolzen angeordnete Rollen mit jeweils einer dazwischen-liegenden, in Bandrichtung verlaufenden Lasche aufweist.

4. Vorrichtung nach einem der Ansprüche 1 bis 3, dadurch gekennzeichnet, dass der stationäre Vorrichtungsteil, der die in das Band (10) eingreifenden Organe trägt, mittels eines Stellantriebes (38) axial verstellbar ist.

5. Vorrichtung nach einem der Ansprüche 1 bis 4, dadurch gekennzeichnet, dass mehrere in der Umfangsrichtung der Aufnahmeschlaufe (44) des Bandes (10) nebeneinander angeordnete Greifer (45) zum Auseinanderziehen der Aufnahmeschlaufe (44) vorhanden sind.

6. Vorrichtung nach einem der Ansprüche 1 bis 5, dadurch gekennzeichnet, dass die beidseitige Umschlingungslücke (12) aussenseitig am Band anliegende Führungsorgane (16,18) zur stufenlosen Anpassung an verschiedene Durchmesser der auszurichtenden Körper verstellbar sind.

## Claims

1. Device for the mutual aligning and rotatable supporting of the adjacent ends of peripheral surfaces of two or more bodies (2,4) of similar shape, in particular of an end plate of a boiler casing, on a circumferential welding apparatus, with a stationary part (34) of the device resting in the guiding means, with means (10) for an incomplete common embracing of said surfaces in a direction parallel to the axis of rotation of the bodies (2,4), the guide means (16,18) and clamping means (22,24) on both sides of an embracing loop (12) on the outer side lie against the embracing means (10), characterized in that the embracing means (10) is an endless strip, that a clamping means (22) is located on the inside in a free loop (20) of the strip (10), that a strip drive (28,30) engages the loop (20), and that a welding electrode (13) is located within the embracing loop (12).

2. Device according to claim 1, characterized in that the strip (10) is composed of chain segments.

3. Device according to claim 2, characterized in that the chain strip (10) consists of rollers in an arrangement of at least two rollers on a common shaft in the width of the strip, and with one lashing between each two rollers moving in the direction of the strip.

4. Device according to one of the claims 1 to 3, characterized in that the stationary device part carrying the elements engaging the strip (10) is axially adjustable by means of a step motor drive (38).

5. Device according to one of the claims 1 to 4, characterized in that it comprises several gripping means (45) placed adjacent to each other in the peripheral direction of the receiving loop (44) of the strip (10).

6. Device according to one of the claims 1 to 5, characterized in that the embracing loop (12) on the outside of the strip has adjacent guide means (16,18) for a stepless adjustment to different diameters of the bodies to be aligned.

## Revendications

1. Dispositif d'alignement réciproque et de fixation en rotation de surfaces frontales d'au moins deux corps (2,4) formées de la même manière et opposées par leurs côtés frontaux, notamment d'un fond de chaudière et d'une enveloppe de chaudière, dans une machine à souder en rond, ce dispositif comportant une partie fixe (34) montée sur paliers dans des organes de guidage, un dispositif (10) entourant incomplètement et simultanément les surfaces périphériques dans la direction parallèle à l'axe de rotation des corps (2,4), des organes de guidage (16,18) et des organes de tension (22,24) s'appliquant des deux côtés d'une zone (12) d'interruption de l'entourage et à l'extérieur, contre le dispositif d'entourage (10), caractérisé en ce que le dispositif (10) est une bande sans fin (10) et qu'un organe de tension (22) est monté du côté intérieur dans une ganse libre (20) de la bande (10), en ce qu'un dispositif d'entraînement de la bande (28,30) s'engage dans la ganse (20) et en ce qu'une électrode de soudage (13) est placée dans la zone (12) d'interruption de l'entourage (12).

2. Dispositif selon la revendication 1, caractérisé en ce que la bande (10) est une bande articulée.

3. Dispositif selon la revendication 2, caractérisé en ce que la bande articulée (10) est une chaîne à rouleaux qui comporte au moins deux rouleaux montés en travers de la bande l'un à côté de l'autre sur un boulon commun et associés chacun à une plaque intercalaire orientée dans le sens de la bande.

4. Dispositif selon l'une des revendications 1 à 3, caractérisé en ce que la pièce fixe de ce dispositif qui porte les organes qui s'engagent dans la bande (10) peut être déplacée dans le sens axial par un dispositif de réglage (38).

5. Dispositif selon l'une des revendications 1 à 4, caractérisé en ce qu'il comprend plusieurs dispositifs de prise qui sont disposés l'un à côté de l'autre dans le sens de la périphérie de la ganse de réception (44) de la bande et assurent l'écartement par traction de la ganse de réception (44).

6. Dispositif selon l'une des revendications 1 à 5, caractérisé en ce que les organes de guidage (16,18) qui s'appliquent extérieurement sur la bande des deux côtés de la zone (12) d'interruption de l'entourage peuvent être déplacés pour assurer une adaptation continue à différentes diamètres des corps qui doivent être alignés.

FIG. 3

FIG. 4

FIG. 2

FIG. 1